# EUROPEAN PATENT SPECIFICATION

(11) **EP 0 916 294 B1**
(45) Date of publication and mention of the grant of the patent: **26.02.2003**
(21) Application number: 98203739.2
(22) Date of filing: 05.11.1998
(51) Int. Cl.: A47G 1/17, F16B 47/00

(54) **A suspension device**
Aufhängevorrichtung
Dispositif de suspension

(30) Priority: 12.11.1997 NL 1007523
(43) Date of publication of application: 19.05.1999
(73) Proprietor: Coram International B.V., 5667 AX Geldrop (NL)
(72) Inventor: Boom, Mels Gerrit Pieter, 5731 HL Mierlo (NL)
(74) Representative: Vollebregt, Cornelis Jacobus, Ir.

(56) References cited:
- DE-U- 8 625 361
- FR-A- 1 446 448
- US-A- 3 848 843
- US-A- 4 923 159

## Description

The invention relates to a suspension device comprising a fixing part, which can be fixed to a wall or a similar surface with a boundary surface which is provided with an adhesive, and a suspension part to be supported by said fixing part, which is suitable for supporting an object or the like which is to be suspended, said fixing and said suspension part being provided with cooperating hook-shaped parts.

Suspension devices of this kind are generally known, and they are used quite frequently, in particular for suspending smaller objects. When such suspension devices are used, it frequently happens that the user of the suspension device wishes to remove the suspension device after some time and/or fix it at another location.

It is known to use an adhesive in the form of an adhesive foil for fixing an object to a wall. The object can be detached from the wall by inserting a knife or the like into the gap between the wall and the object and make a twisting movement with said knife. When a sufficiently large force is thus exerted on the adhesive foil, it will become detached from the wall or similar surface in one go.

The use of a knife or similar object involves the risk of damaging the object which is fixed to the wall or similar surface by means of the adhesive foil, whilst there is also a risk of the user being injured.

The object of the invention is to obtain a suspension device of the kind referred to above, wherein said suspension device can be removed from the wall or similar surface in a simple and efficient manner.

According to the invention this objective can be accomplished in that, when said fixing and suspension parts are connected, the suspension part is capable of pivoting movement with respect to the fixing part about a pivot axis extending parallel with said wall and said pivoting movement thereby forming on said suspension part a pressure part which is spaced from said pivot axis by some distance and which projects from said fixing part, which pressure part is positioned substantially in line with the boundary surface of the fixing part, which is provided with an adhesive.

With the suspension device according to the invention, the suspension part can be pivoted with respect to the fixing part for the purpose of removing the suspension device from the wall or similar surface to which the suspension device is fixed, in such a manner that the pressure part is pressed against the wall or similar surface, and that when the suspension part is pivoted further with respect to the fixing part, a force which urges the fixing part away from the wall or similar surface is exerted on the fixing part, as a result of which the fixing part will come loose from the wall or similar surface.

It is noted that US-A-3 848 843 shows a suspension device having a fixing part fixed to a wall by adhesive and a suspension part supported by said fixing part. Cooperating hook shaped parts of the fixing part and of the suspension part extend over an angle greater than 180°.

FR-A-1.446.448 shows a combination of a fixing part and a suspension part whereby the fixing part is fixed to a wall by means of screws.

The invention will be explained in more detail hereafter by means of a possible embodiment of a suspension device according to the invention, which is schematically illustrated in the accompanying figures.

Figure 1 is a schematic side view of a suspension device according to the invention, which is fixed to a wall or similar surface.

Figure 2 is a schematic side view which corresponds with Figure 1, wherein the suspension part has been pivoted with respect to the fixing part.

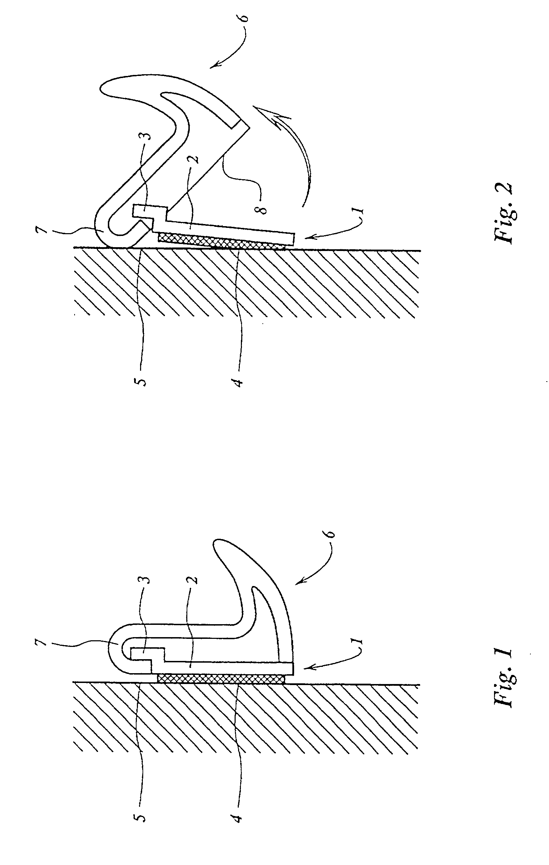

As is shown in Figure 1, the suspension part according to the invention comprises a fixing part 1, which comprises a backplate 2. A hook-shaped part 3, which is in one piece with backplate 2, is formed on the upper end of backplate 2.

Said fixing part is fixed to a wall 5 or similar surface by means of an adhesive in the form of an adhesive foil 4.

It is noted that for the sake of clarity the thickness of the adhesive foil 4 as shown in the figure is greater than it actually is.

A suspension part 6 is connected to the fixing part of the suspension device by means of a hook-shaped part 7 which forms part of the suspension part, which hook-shaped part 7 is hooked behind hook-shaped projection 3, as will be apparent from Figure 1.

Suspension part 6 may have any desired shape, which may be selected in dependence on the purpose for which the suspension device is intended.

In the illustrated embodiment, the hook 7 which forms part of the suspension part is loosely hooked over the hook-shaped part 3 of the fixing part, and the suspension part bears with a boundary surface 8 against the back part 2 of the suspension part in the position of use.

In order to detach the fixing part from wall 5, suspension part 6 can be pivoted with respect to fixing part 3 as is shown in Figure 2, about an imaginary pivot pin extending parallel to wall 5 which is present near the cooperating hook-shaped parts 3 and 7. As will be apparent from Figure 2, the part of hook 7 of the suspension part that is in line with adhesive foil 4 and spaced from the imaginary pivot pin by some distance, will come into contact with the wall thereby, thus forming a pressure part, which on the one hand will be pressed against wall 5 and which on the other hand will exert a force on hook-shaped part 3 in a direction away from the wall. If said force exceeds a predetermined value, adhesive foil 4 will come loose, so that the entire suspension device will become detached from wall 5.

It will be apparent that additions and/or variations to the embodiment of the suspension device according to the invention as described and schematically illustrated in the figures are conceivable.

Thus, the shape of the suspension part may be adapted according to the intended purpose, for example, whereby said part will preferably be designed such that the pivoting of the suspension part with respect to the fixing part can be carried out in a simple and logical manner. Furthermore, the fixing part and the suspension part may be pivotally interconnected by means of a hinge pin or the like, for example, so that they will be movable relative to each other about a real pivot pin rather than about an imaginary pivot pin as is the case with the embodiment as shown in Figures 1 and 2.

## Claims

1. A suspension device comprising a fixing part (1), which can be fixed to a wall (5) or a similar surface with a boundary surface which is provided with an adhesive (4), and a suspension part (6) to be supported by said fixing part (1), which is suitable for supporting an object or the like which is to be suspended, said fixing (1) and said suspension (6) parts being provided with cooperating hook-shape parts (3,7), **characterized in that**, when said fixing (1) and suspension (6) parts are connected, the suspension part (6) is capable of pivoting movement with respect to the fixing part (1) about a pivot axis extending parallel with said wall (5) and said pivoting movement thereby forming on said suspension part (6) a pressure part (7), which is spaced from said pivot axis by some distance and which projects from said fixing part (1), which pressure part (7) is positioned substantially in line with the boundary surface of the fixing part (1), which is provided with an adhesive (4).

2. A suspension device according to claim 1, **characterized in that** said fixing part (1) and said suspension part (6) are provided near said pivot axis with said engaging hook-shaped parts (3, 7).

3. A suspension device according to claim 1 or 2, **characterized in that** said pivot axis is present near the upper side of the suspension device (1, 6) in the position wherein the suspension device (1, 6) is fixed to a wall (5) or similar surface.

4. A suspension device according to any one of the claims 1 - 3, **characterized in that** said adhesive (4) is an adhesive foil.

## Patentansprüche

1. Eine Aufhängevorrichtung, umfassend ein Befestigungsteil (1), welches an einer Wand (5) oder einer ähnlichen Oberfläche mit einer Grenzfläche befestigt werden kann, welches mit einem Klebemittel (4) versehen ist, und ein Aufhängungsteil (6), welches durch das gesagte Befestigungsteil (1) getragen werden soll, welches geeignet ist zum Tragen eines Objektes oder von ähnlichem, das aufgehängt werden soll, wobei das gesagte Befestigungsteil (1) und das gesagte Aufhängungsteil (6) mit zusammenarbeitenden hakenförmigen Teilen (3, 7) versehen sind, **dadurch gekennzeichnet, dass**, wenn das Befestigungsteil (1) und das Aufhängungsteil (6) miteinander verbunden sind, das Aufhängungsteil (6) eine Drehbewegung im Hinblick auf das Befestigungsteil (1) über eine Drehachse, welche sich parallel zu der gesagten Wand (5) erstreckt, ausführen kann und die gesagte Drehbewegung dabei auf dem gesagten Aufhängungsteil (6) einen Druckteil (7) ausbildet, welcher von der gesagten Drehachse um einen kleinen Abstand beabstandet ist und welcher von dem gesagten Befestigungsteil (1) hervorsteht, wobei der Druckteil (7) im wesentlichen in einer Linie mit der Grenzfläche des Befestigungsteils (1) positioniert ist, welches mit einem Klebemittel (4) versehen ist.

2. Eine Aufhängungsvorrichtung gemäß Anspruch 1, **dadurch gekennzeichnet, dass** das gesagte Befestigungsteil (1) und das gesagte Aufhängungsteil (6) nahe der gesagten Drehachse mit den gesagten ineinander eingreifenden hakenförmigen Teilen (3, 7) versehen sind.

3. Eine Aufhängungsvorrichtung gemäß Anspruch 1 oder 2, **dadurch gekennzeichnet, dass** die gesagte Drehachse nahe der Oberseite der gesagten Aufhängungsvorrichtung (1, 6) in der Position, in welcher die Aufhängungsvorrichtung (1, 6) an einer Wand (5) oder einer ähnlichen Oberfläche befestigt ist, vorliegt.

4. Eine Aufhängungsvorrichtung gemäß einem der Ansprüche 1 bis 3, **dadurch gekennzeichnet, dass** das gesagte Klebemittel (4) eine Klebefolie ist.

## Revendications

1. Dispositif de suspension comprenant un élément de fixation (1), qui peut être fixé à un mur (5) ou à une surface semblable, avec une surface d'extrémité qui est pourvue d'un adhésif (4), et un élément de suspension (6) destiné à être supporté par ledit élément de fixation (1), qui convient pour supporter un objet quelconque qui doit être suspendu, lesdits éléments de fixation (1) et de suspension (6) étant pourvus d'éléments coopérants en forme de crochet (3,7), **caractérisé en ce que**, lorsque lesdits éléments de fixation (1) et de suspension (6) sont accouplés, l'élément de suspension (6) peut effectuer un mouvement pivotant relativement à l'élément de fixation (1) autour d'un axe de pivot qui s'étend parallèlement audit mur (5) et ledit mouvement de pivotement formant ainsi, sur ledit élément de suspension (6), un élément de poussée (7) qui est écarté d'une certaine distance relativement audit axe de pivot et qui fait saillie depuis ledit élément de fixation (1), ledit élément de poussée (7) étant placé en alignement sensible avec la surface d'extrémité de l'élément de fixation (1), qui est pourvue d'un adhésif (4).

2. Dispositif de suspension selon la revendication 1, **caractérisé en ce que** ledit élément de fixation (1) et ledit élément de suspension (6) sont pourvus, à proximité dudit axe de pivot, desdits éléments d'engagement en forme de crochet (3, 7).

3. Dispositif de suspension selon la revendication 1 ou 2, **caractérisé en ce que** ledit axe de pivot est présent à proximité du côté supérieur du dispositif de suspension (1, 6) dans la position dans laquelle le dispositif de suspension (1, 6) est fixé à un mur (5) ou à une surface semblable.

4. Dispositif de suspension selon l'une quelconque des revendications 1 à 3, **caractérisé en ce que** ledit adhésif (4) est une feuille adhésive.
